# DEMANDE DE BREVET EUROPEEN

(11) **EP 0 633 150 A1**
(43) Date de publication de la demande: **11.01.1995**
(21) Numéro de dépôt: 94401505.6
(22) Date de dépôt: 01.07.1994
(51) Int. Cl.: B60B 21/12, B60C 29/00

(54) **Dispositif d'étanchéité pour roue à rayons et roue comportant un tel dispositif**

(30) Priorité: 07.07.1993 FR 9308326
(71) Demandeur: HUTCHINSON, F-75008 Paris (FR)
(72) Inventeur: Lefebvre, Gislaine, F-45720 Coullons (FR); Sicard, Alain, F-45120 Chalette (FR)
(74) Mandataire: Ramey, Daniel

(57) **Abrégé**

Dispositif d'étanchéité pour roue à rayons et pneumatique sans chambre à air, comprenant une bande annulaire (F) initialement dimensionnée de façon telle qu'après mise en place sur la jante (J) avec laquelle elle est destiné à coopérer, elle ménage deux zones marginales circonférentielles (z₁, z₂) qui recouvrent les joues latérales (j₁, j₂) de ladite jante (J), et qui comporte deux nervures circonférentielles (N) de maintien des talons du pneumatique.

## Description

L'invention est relative à un dispositif d'étanchéité pour roue à rayons équipée d'un pneumatique sans chambre à air et à une roue munie d'un tel dispositif.

On sait que les roues à rayons métalliques, par exemple celles de bicyclettes, VTT (vélos tout terrain), motocyclettes, cyclomoteurs, fauteuils pour handicapés, etc... sont le plus généralement munies de pneumatiques destinés à recevoir une chambre à air et cela en raison des difficultés rencontrées pour équiper ces roues de bandages sans chambre à air. Si l'on a déjà proposé, par exemple dans FR-A-2 526 374, d'utiliser un pneumatique sans chambre à air sur une roue de motocyclette, de bons résultats ne peuvent être obtenus selon ce document qu'à l'aide d'une structure particulière à rayons coudés, tandis que pour obtenir l'étanchéité requise d'un bandage pneumatique dont les talons sont en contact avec les épaulements d'une jante de roue usuelle, il faut traiter ladite jante pour former sur une partie de sa surface un revêtement étanche, comme décrit dans FR-A-1 382 217. Le procédé selon ce dernier document est cependant d'une réalisation particulièrement lente et délicate, de sorte que le problème reste posé de fournir un dispositif d'étanchéité pour une roue à rayons usuelle propre à être équipée d'un pneumatique sans chambre à air.

On connaît également, par les documents US-A-4,108,232 et DE-A 3 715 669, des dispositifs comprenant une bande annulaire d'étanchéité qui recouvre la surface externe et les flancs de la jante de la roue de telle sorte que les parties latérales de la bande d'étanchéité sont appliquées sur les flancs de la jante par les talons du pneumatique à l'état gonflé. On a cependant constaté que ces dispositifs ne suffisaient pas à empêcher un glissement ou un déplacement des talons de pneumatique en cas de freinage puissant, ce qui peut entraîner le dégonflement et le "déjantage" du pneumatique.

C'est, d'une façon générale, un but de l'invention de fournir une solution à ce problème.

C'est, à cet égard, un but de l'invention de fournir un dispositif permettant de rendre étanche l'assemblage d'une roue à rayons et d'un pneumatique sans chambre, quel que soit le profil de la jante.

C'est, aussi, un but de l'invention de fournir un tel dispositif qui soit simple, de faible prix pour ne pas grever le coût de la roue qu'il équipe et qui, complémentairement, améliore le confort et la sécurité de l'utilisateur d'un engin muni de telles roues.

L'invention propose un dispositif d'étanchéité pour roue à rayons équipée d'un pneumatique sans chambre à air, ce dispositif étant constitué par une bande annulaire de matériau élastomère, plastomère ou analogue, qui est dimensionnée de façon telle qu'après montage sur la jante de la roue, elle présente deux zones marginales circonférentielles qui recouvrent les joues latérales de la jante et qui sont appliquées sur celle-ci par les talons du pneumatique à l'état gonflé, caractérisé en ce que la surface externe de la bande annulaire comprend deux nervures circonférentielles en saillie vers l'extérieur, formant butées pour les talons du pneumatique qui sont ainsi positionnés entre ces nervures et lesdites zones marginales appliquées sur les flancs de la jante.

De façon surprenante, la présence de deux nervures circonférentielles de faible hauteur sur la bande annulaire d'étanchéité suffit pour éviter tout risque de dégonflage et de déjantage du pneumatique même en cas de freinage très violent, ce qui améliore beaucoup la sécurité du cycliste ou motocycliste.

Corollairement, il devient possible de gonfler les pneumatiques à une pression plus faible, ce qui améliore le confort en déplacement.

Ces nervures circonférentielles peuvent avoir en section transversale des formes diverses, par exemple semi-circulaires, semi-elliptiques, triangulaires, carrées, trapézoïdales, etc., qui sont avantageusement adaptées aux formes des talons de pneumatique.

Par ailleurs, la bande annulaire est avantageusement fixée, par collage ou au moyen d'un ruban adhésif à double face, sur la jante de la roue, ce qui permet de la maintenir en place même si le pneumatique a tendance à tourner sur la jante, par exemple en cas de freinage important.

Cela présente un intérêt évident, notamment quand une valve de gonflage est fixée sur la bande annulaire d'étanchéité, car l'immobilisation de cette bande sur la jante évite tout risque d'arrachement de la valve de gonflage.

Dans une réalisation préférée, le matériau constitutif de la bande d'étanchéité est avantageusement un matériau caoutchoutique ou du type des matières plastiques à bonnes caractéristiques d'étanchéité à l'air, comme un coupage de caoutchouc naturel ou de caoutchouc butyle ou de polyuréthanne.

Quel que soit le matériau mis en oeuvre, l'épaisseur de la bande annulaire est avantageusement de l'ordre de 1 à 5 mm et son diamètre est de préférence légèrement inférieur à celui de la jante avec laquelle elle est destinée à coopérer, de sorte que cette bande est mise en tension élastique lorsqu'elle est rapportée sur la roue qu'elle équipe.

L'invention a également pour objet une roue à rayons comportant un dispositif tel que défini ci-dessus et un pneumatique sans chambre à air.

L'invention sera mieux comprise à la lecture de la description qui suit, faite à titre d'exemple et en référence aux dessins annexés dans lesquels :
- la figure 1 est une demi-vue partielle en coupe d'une roue à rayons et à pneumatique sans chambre à air munie d'un dispositif selon l'invention ;
- les figures 2 à 6 sont des vues schématiques en coupe transversale de variantes de réalisation du dispositif selon l'invention.

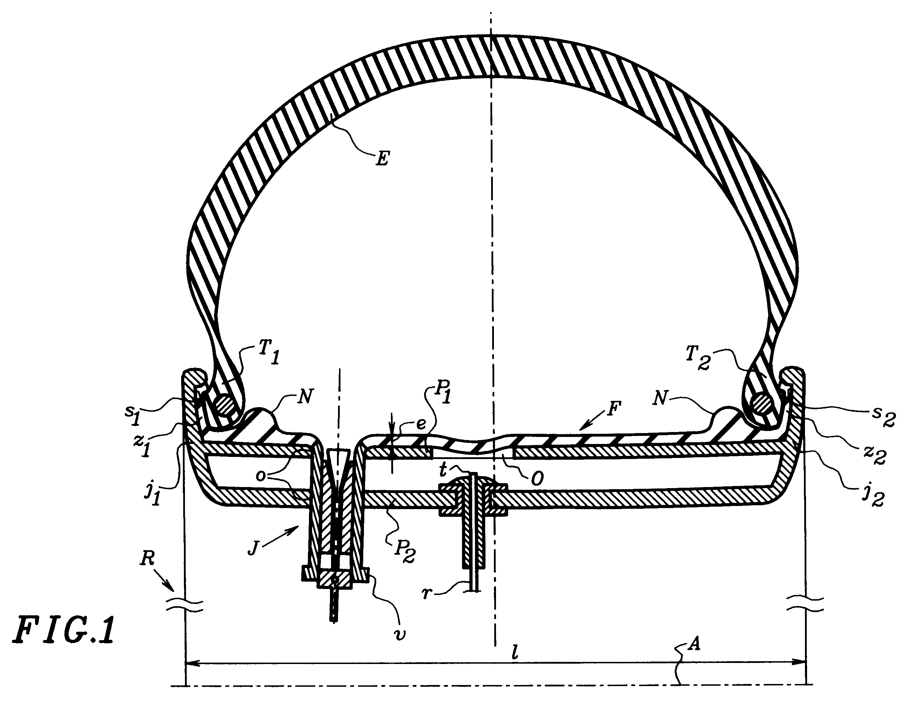

En figure 1, la roue R d'axe A comprend des rayons r qui relient un moyeu non représenté à une jante J représentée ici en tant que jante à double paroi, - sans que cette indication ait un caractère limitatif -, les têtes de rayons t faisant saillie dans l'intervalle ménagé entre les parois p₁ et p₂ de la jante J, ou traversant la paroi extérieure p₁ par des ouvertures O de celle-ci.

Pour obtenir une étanchéité satisfaisante avec une roue R usuelle et une enveloppe E de pneumatique sans chambre à air, l'invention propose d'associer à la jante J un dispositif d'étanchéité constitué par une bande annulaire F en matériau de type élastomère, plastomère ou analogue présentant de bonnes caractéristiques d'étanchéité à l'air, comme un coupage de caoutchouc naturel ou de caoutchouc butyle ou de polyuréthanne.

Conformément à l'invention, la bande annulaire F dont l'épaisseur e peut être de l'ordre de 1 à 5 mm, est dimensionnée de façon telle par rapport à la longueur axiale l de la jante J qu'après mise en place sur ladite jante, cette bande F recouvre non seulement la totalité de la paroi p₁, mais règne également par ses zones marginales circonférentielles z₁ et z₂ sur les surfaces internes s₁ et s₂, respectivement, des joues j₁ et j₂ de la jante J, le dispositif ayant ainsi en section quelque peu la forme d'un U.

La bande d'étanchéité F comprend également une valve v de gonflage du pneumatique, solidaire de la bande d'étanchéité (initialement plate ou profilée) et qui s'étend au travers d'ouvertures o des parois p₁ et p₂ de la jante J.

La face extérieure de la bande d'étanchéité F est formée avec deux nervures circonférentielles N de faible hauteur, qui ont une forme sensiblement semi-circulaire ou en Ω en figure 1, et qui s'étendent parallèlement aux zones marginales z₁, z₂ à une faible distance de celles-ci correspondant sensiblement à la largeur d'un talon T₁, T₂ de pneumatique, les nervures N ayant essentiellement pour fonction d'empêcher un déplacement des talons T₁, T₂ vers l'intérieur.

Il suffit pour cela que les nervures N aient une hauteur comprise entre 1 et 3 mm environ.

Lorsque le dispositif selon l'invention, dont le diamètre à l'état libre est légèrement inférieur au diamètre de la paroi p₁, est rapporté sur cette dernière avec mise en tension élastique et que le pneumatique E est mis en place sur la jante ainsi garnie, les zones marginales z₁ et z₂ sont interposées entre les joues j₁ et j₂ et les talons T₁ et T₂ du pneumatique, de sorte qu'après gonflage de ce dernier par l'intermédiaire de la valve v, à une pression de gonflage qui peut être inférieure à celle habituellement mise en oeuvre pour le pneumatique E utilisé, on obtient une excellente étanchéité entre les talons ou bourrelets du pneumatique et les joues de la jante, étanchéité qui est conservée au cours du temps, y compris en cas de choc sur la roue.

De plus, les talons du pneumatique sont eux-mêmes maintenus entre les zones marginales z₁, z₂ (appliquées sur les flancs j₁, j₂) et les nervures N, ce qui évite tout risque de dégonflage et de déjantage par exemple en cas de freinage brutal.

L'utilisation d'une pression de gonflage inférieure à celle généralement requise pour des jantes et pneumatiques correspondants permet d'accroître le confort de l'usager d'un engin équipé de roues selon l'invention.

A cet avantage, s'ajoutent ceux résultant de l'absence de chambre à air (on évite un éventuel pincement de cette dernière en cas de talonnage et les inconvénients liés au glissement du pneu et de la chambre à air sur la jante en cas de freinage brutal, comme par exemple celui d'un éclatement par arrachage de la valve).

De préférence, la forme en section transversale des nervures N est adaptée à la forme des talons des pneumatiques.

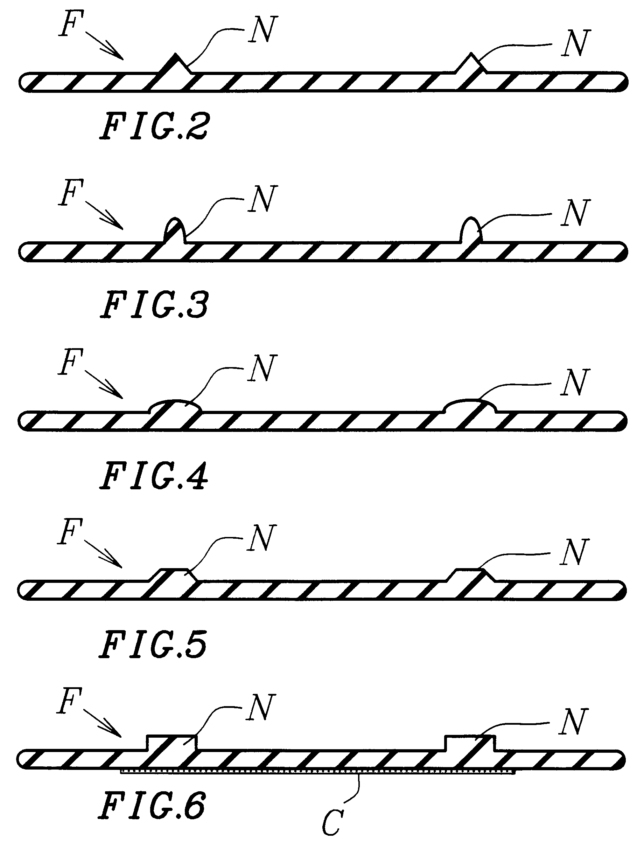

On a représenté à titre d'exemple diverses formes possibles de section transversale aux figures 2 à 6.

En figure 2, la bande d'étanchéité F a des nervures N de section triangulaire. En figures 3 et 4, les nervures N ont des sections semi-elliptiques. En figure 5, les sections des nervures sont trapézoïdales, et elles sont sensiblement carrées en figure 6.

Par ailleurs, et comme représenté schématiquement en figure 6, un ruban adhésif double-face ou une couche de colle C peut être posé sur la face intérieure de la bande F pour fixation de celle-ci sur la jante.

L'invention n'est pas limitée aux formes de réalisation décrites et représentées. Elle s'applique, en particulier, à des jantes ayant un profil différent de celui illustré au dessin, et à des jantes à simple ou double paroi.

## Revendications

1. Dispositif d'étanchéité pour roue à rayons équipée d'un pneumatique sans chambre à air, ce dispositif étant constitué par une bande annulaire (F) de matériau élastomère, plastomère ou analogue, qui est dimensionnée de façon telle qu'après montage sur la jante (J) de la roue, elle présente deux zones marginales circonférentielles (z₁, z₂) qui recouvrent les joues latérales de la jante et qui sont appliquées sur celle-ci par les talons (T₁, T₂) du pneumatique à l'état gonflé, caractérisé en ce que la surface externe de la bande annulaire (F) comprend deux nervures circonférentielles (N) en saillie vers l'extérieur, formant butées pour les talons du pneumatique qui sont ainsi positionnés entre ces nervures et lesdites zones marginales (z₁, z₂) appliquées sur les flancs de la jante.

2. Dispositif selon la revendication 1, caractérisé en ce que lesdites nervures circonférentielles (N) sont de hauteur faible, comprise entre 1 et 3 mm environ.

3. Dispositif selon la revendication 1 ou 2, caractérisé en ce que lesdites nervures circonférentielles (N) ont en section transversale une forme semi-circulaire, semi-elliptique, triangulaire, trapézoïdale ou carrée.

4. Dispositif selon les revendications 1 à 3, caractérisé en ce que la bande annulaire (F) comprend une valve de gonflage qui s'étend à travers un orifice de la jante.

5. Dispositif selon une des revendications 1 à 4, caractérisé en ce que le matériau de la bande annulaire (F) est un matériau caoutchoutique ou du type des matières plastiques, à bonnes caractéristiques d'étanchéité à l'air, comme un coupage de caoutchouc naturel ou de caoutchouc butyle ou de polyuréthane.

6. Dispositif selon l'une des revendications précédentes, caractérisé en ce que l'épaisseur (e) de la bande annulaire (F) est avantageusement de l'ordre de 1 à 5 mm et son diamètre est légèrement inférieur à celui de la jante (J) avec laquelle elle est destinée à coopérer.

7. Dispositif selon l'une des revendications précédentes, caractérisé en ce que ladite bande annulaire (F) est fixée sur la jante (J) par collage ou au moyen d'un ruban adhésif double-face.

8. Roue à rayons, en particulier pour bicyclette ou cyclomoteur, caractérisé en ce qu'elle comprend un dispositif d'étanchéité selon l'une des revendications précédentes et un pneumatique (E) sans chambre à air.
